# EUROPEAN PATENT APPLICATION

(11) **EP 2 960 377 A1**
(43) Date of publication of application: **30.12.2015**
(21) Application number: 14174770.9
(22) Date of filing: 27.06.2014
(51) Int. Cl.: E02F 3/96, E02F 9/00, E02F 9/22

(54) **Pin of a link assembly for decoupling a cylinder from a jaw in a demolition tool**

(71) Applicant: Caterpillar Work Tools B.V., 5232 BJ 's-Hertogenbosch (NL)
(72) Inventor: Van Gemert, Johannes Lambert Leonardus, 5451 BT Mill (NL)
(74) Representative: Modiano, Micaela Nadia

(57) **Abstract**

A pin (30) of a link assembly (10) for decoupling a cylinder (138) from a jaw (132) in demolition tool (128) is disclosed. The pin (30) comprises: a longitudinally extended body (36), the body (36) having a first end (32) and a second end (34); and a groove (40) adjacent the first end (32), the groove (40) being in a plane substantially transverse to a longitudinal axis (38).

## Description

### Technical Field

This disclosure relates to the field of demolition tools for crushing and/or cutting material and more particularly to the field of replacing working parts in demolition tools.

### Background

A demolition tool for crushing and/ or cutting material is generally known. Typically, the demolition tool may comprise a jaw assembly having a lower jaw and an upper jaw. The upper and lower jaws may be pivotally connected. The upper and lower jaws may be moveable relative to each other. Blades may be provided on both the upper jaw and the lower jaw. The work material may be crushed or cut by closing the upper jaw and the lower jaw under hydraulic pressure.

The demolition tool may have a jaw assembly that is suitable for crushing concrete. The jaw assembly may be adapted for crushing or cutting other materials, for example for cutting scrap iron and/or iron sections. The abrasive nature or hardness of some of these materials may cause wear of the surfaces that engage the materials and moving parts that impart force to the jaw assembly, such as hydraulic cylinders.

The demolition tool may be provided with replaceable cylinders. The cylinders may be connected directly to the jaw assembly by conventional techniques. The cylinders may be connected to the upper or the lower jaw.

The present disclosure is directed, at least in part, to improving or overcoming one or more aspects of the prior art system.

### Brief Summary of the Invention

In a first aspect, the present disclosure describes a pin of a link assembly for decoupling a cylinder from a jaw in demolition tool. The pin may comprise: a longitudinally extended body, the body having a first end; and a second end and a groove adjacent the first end, the groove being in a plane substantially transverse to a longitudinal axis.

### Brief Description of the Drawings

The foregoing and other features and advantages of the present disclosure will be more fully understood from the following description of various embodiments, when read together with the accompanying drawings, in which:
Fig. 1 is an isometric view of a link assembly coupled to a piston rod head according to the present disclosure;
Fig. 2 is an isometric view of a pair of lugs of the link assembly of Fig. 1;
Fig. 3 is an isometric view of a link assembly according to the present disclosure;
Fig. 4 is an isometric view of a portion of a pin of the link assembly of Fig. 3;
Fig. 5 is a sectional view through the portion of the pin of Fig. 4;
Fig. 6 is an exploded view of lock mechanism of the link assembly of Fig. 1;
Fig. 7 is an isometric view of a catch plate of the link assembly of Fig. 3;
Fig. 8 is a sectional view through a portion of the catch plate of Fig. 7;
Fig. 9 is a perspective view of a demolition tool with the link assembly of Fig. 3 on a jaw of the demolition tool; and
Figs. 10 to 22 illustrate a method of decoupling a cylinder from a jaw in a demolition tool.

### Detailed Description

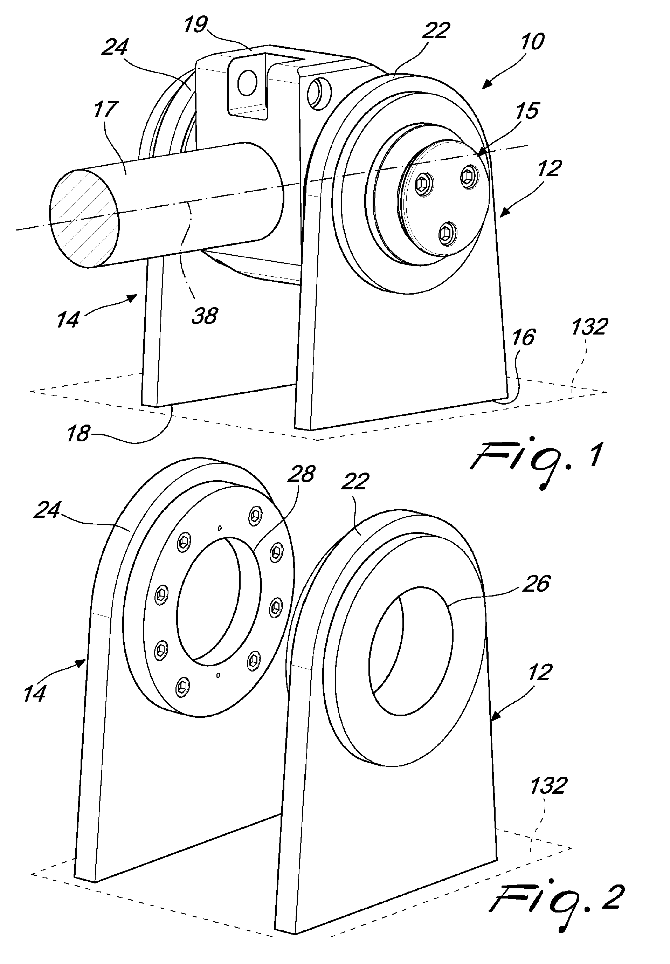

This disclosure generally relates to a link assembly for decoupling a cylinder in demolition tool. Fig. 1 illustrates the link assembly 10. The link assembly 10 may have a pair of lugs 12, 14, a pin (not shown), a lock mechanism 15 and a lock element (not shown). A piston rod 17 of a hydraulic cylinder (not shown) may be coupled to the link assembly 10 through a piston rod head 19.

The first lug **12** may be spaced from the second lug **14.** The first and second lugs **12, 14** may each have a respective fixed end **16, 18.** The first and second lugs **12, 14** may each be supported at the respective fixed ends **16, 18.** The first and second lugs **12, 14** may each be supported on a jaw (not shown) at the respective fixed ends **16, 18.** The jaw may be a lower jaw or an upper jaw of a jaw set (not shown). First and second lugs **12, 14** may be orthogonal to the surface of the jaw.

First and second lugs **12, 14** may be cantilevered structures. First and second lugs **12, 14** may extend from the surface of the jaw such that respective free ends **22, 24** are positioned away from the jaw. First and second lugs **12, 14** may be mutually parallel. First and second lugs **12, 14** may be positioned so as to have surfaces that face each other. First and second lugs **12, 14** may be positioned so as to be mutually aligned. First and second lugs **12, 14** may be plate like. The first and second lugs **12, 14** may have bushings at the first and second bores **26, 28.** Bushings may extend through the first and second bores **26, 28.**

With respect to Fig. 2, each of the first and second lugs **12, 14** may have first and second bores **26, 28.** Bores **26, 28** may extend through the first and second lugs **12, 14.** The first and second bores **26, 28** may be spaced apart. The first and second bores **26, 28** may be mutually aligned. First and second bores **26, 28** may be equidistant from the respective fixed ends **16, 18** and the respective free ends **22, 24.** First and second bores **26, 28** may have the same dimensions. Each first and second bore **26, 28** may be in a respective vertical plane that are mutually parallel. The respective vertical planes may be orthogonal to the surface of the jaw (not shown).

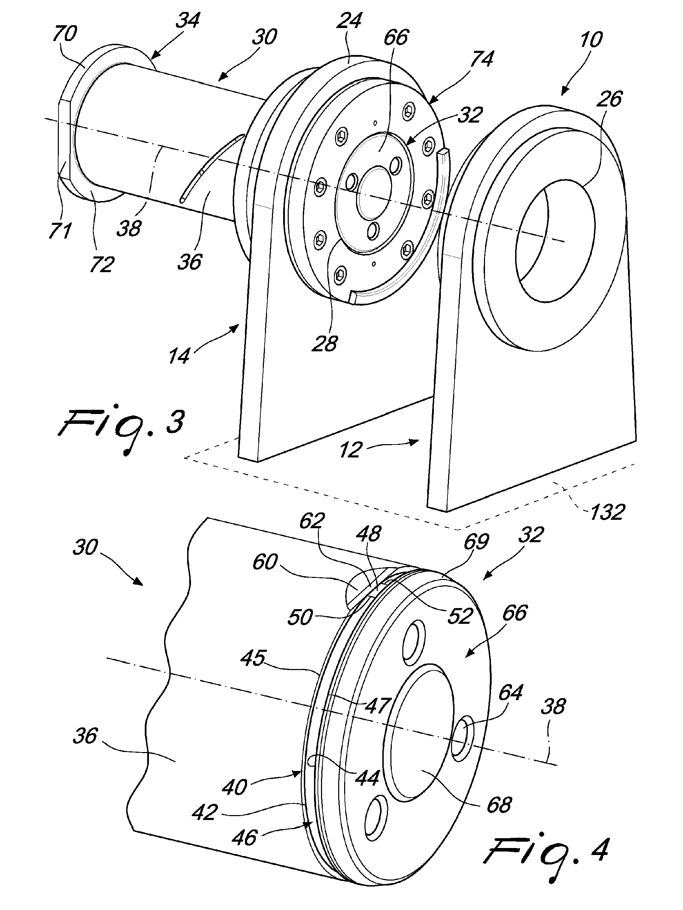

With reference to Fig. 3, the pin **30** may be movable relative to the first and second lugs **12, 14.** Pin **30** may be movable relative to the jaw (not shown). The pin **30** may be movable through the first and second bores **26, 28.** The pin **30** may be movably supported by the first lug **12** and/ or second lug **14** at the respective first bore **26** and/ or second bore **28.** The pin **30** may be movable at the first and/ or second bores **26, 28.** The pin **30** may be movable through the bushings at the first and/ or second bores **26, 28.**

The pin **30** may be slidably supported by the first lug **12** and/ or second lug **14** at the respective first bore **26** and/ or second bore **28.** The pin **30** may be slidable through the first and/ or second bores **26, 28.** The pin **30** may be slidable through the bushings at the first and/ or second bores **26, 28.**

Pin **30** may be rotatably supported by the first lug **12** and/ or second lug **14** at the respective first bore **26** and/ or second bore **28.** The pin **30** may be rotatable in the first and/ or second bores **26, 28.** The pin **30** may be rotatable at the bushings at the first and/ or second bores **26, 28.**

Pin **30** may have a longitudinally extended body **36.** Body **36** may be formed as a rod. Pin **30** may have a first end **32** and a second end **34** at opposite ends of the body **36.** Pin **30** may have a longitudinal axis **38** extending through the body **36.** Pin **30** may be rotatable about the longitudinal axis **38.** Body **36** may be sized to fit in the first and second bores **26, 28.** Body **36** may be sized to fit in the bushings at the first and second bores **26, 28.** In an embodiment, the pin **30** may have an outside diameter of 125 mm.

With reference to Fig. 4, the pin **30** may have a groove **40** at the first end **32.** Groove **40** may be adjacent the first end **32.** Groove **40** may encircle the body **36.** In an embodiment, groove **40** may partially encircle body **36.** The groove **40** may be in a plane that is substantially orthogonal to the longitudinal axis **38** of the pin **30.** The groove **40** may be in a plane that is substantially transverse to body **36.**

Groove **40** may extend into body **36.** Groove **40** may extend in a direction transverse to the longitudinal axis **38.** In an embodiment, groove **40** may extend radially into body **36.** Groove **40** may have side walls **42, 44** and a floor **46.** Side walls **42, 44** may be mutually parallel. Side walls **42, 44** may be orthogonal to the longitudinal axis **38.** Side walls **42, 44** may extend substantially transverse to the body **36.** Side wall **42** may be closer to the first end relative to the side wall **42.** Floor **46** may be normal to the side walls **42, 44.** Floor **46** may lie on a plane that is parallel to the longitudinal axis **38.** Floor **46** may be curved. Floor **46** may connect side walls **42, 44.** Groove **40** may have edges **45** and **47** at surface **36** of the pin **30.**

Groove **40** may have a width of 6 mm. The distance between the side walls **42, 44** may be 6 mm. Groove **40** may have a diameter of 120 mm. The diameter of the groove may be measured from a portion of floor **46** portion to an opposite portion of floor **46** across the centre of the pin **30.**

Groove **40** may have a depth that is measured from floor **46** to the surface of body **36.** Groove **40** may have a depth that is measured from floor 46 **to** the edge **47** of the side wall **44.** The magnitude of depth may vary along the groove **40.** The magnitude of depth may vary uniformly along the groove **40.** The magnitude of depth may vary about the longitudinal axis **38.** In an embodiment, the magnitude of depth may have plurality of variations about the longitudinal axis **38.** The depth of the groove **40** from the edge **47** to the floor **46** maybe 2.5 mm.

The groove **40** may have at least one platform **48.** Platform **48** may be a portion of the floor **46.** Platform **48** may be a lowered portion of the floor **46.** The magnitude of the depth of the groove **40** may be highest at the platform **48** relative to the rest of the groove **40.** The magnitude of the depth of the groove **40** may be uniform across the platform **48.** Platform **48** may be the lowest portion of the groove **40** relative to the portion of the floor **46** along the rest of the groove **40.** The distance from the edge **47** to the platform **48** may be 2.75 mm. Platform **48** may have a radial distance of 59.75 mm from the centre of the pin **30.**

The platform **48** may be spaced from the edge **47** of the side wall **44.** The platform **48** may be spaced from a portion of the edge **47.** Platform **48** may be spaced from the edge **47** radially adjacent thereto. The side of platform **48** opposite side wall **44** may not have a side wall **42.**

Platform **48** may have a first free side **50** and a second free side **52.** The first and second free sides **50, 52** may not be adjoined to the side walls **42, 44.** The first and second free sides **50, 52** may be adjacent the side wall **44.**

In an embodiment, a plurality of platforms **48** may be provided in the groove **40.** The magnitude of depth at each platform **48** may be the same. The magnitude of the depth of the groove **40** may be highest at each platform **48** relative to the rest of the groove **40.** Each platform **48** may be the lowest portions of the groove **40** relative to the portions of the floor **46** along the rest of the groove **40.** The plurality of platforms **48** may be interspersed in the floor **46.** Side wall **42** may be absent at each platform **48.**

In an embodiment, the groove **40** may have at least two platforms **48** located at opposite points of the groove **40.** The platforms **48** may have an angular separation of 180 degrees in the groove **40.** The platforms **48** may have an angular separation of 180 degrees about the longitudinal axis **38.** Two sections of floor **46** may be interposed between the platforms **48.**

In a further embodiment, the groove **40** may have at least four platforms **48.** The platforms **48** may have an angular separation of 90 degrees in the groove **40.** The platforms **48** may have an angular separation of 90 degrees about the longitudinal axis **38.** Four sections of floor **46** may be interposed between the platforms **48.**

With reference to Fig. 4, the pin **30** may further comprise a tapered portion **60.** Tapered portion **60** may be adjacent to the groove **40.** Tapered portion **60** may have a surface that increases in inclination towards the groove **40.** The tapered portion **60** may be bound by the surface of the body **36** at the side opposite the groove **40.** Tapered portion **60** may be contiguous with the surface of the body **36.** Tapered portion **60** may have an angle of inclination of 15 degrees.

The pin **30** may further comprise a flattened portion **62** interposed between the tapered portion **60** and the groove **40.** An edge of the flattened portion **62** adjacent tapered portion **60** may be contiguous with tapered portion **60** and groove **40.** Flattened portion **62** may be contiguous with edge **45.**

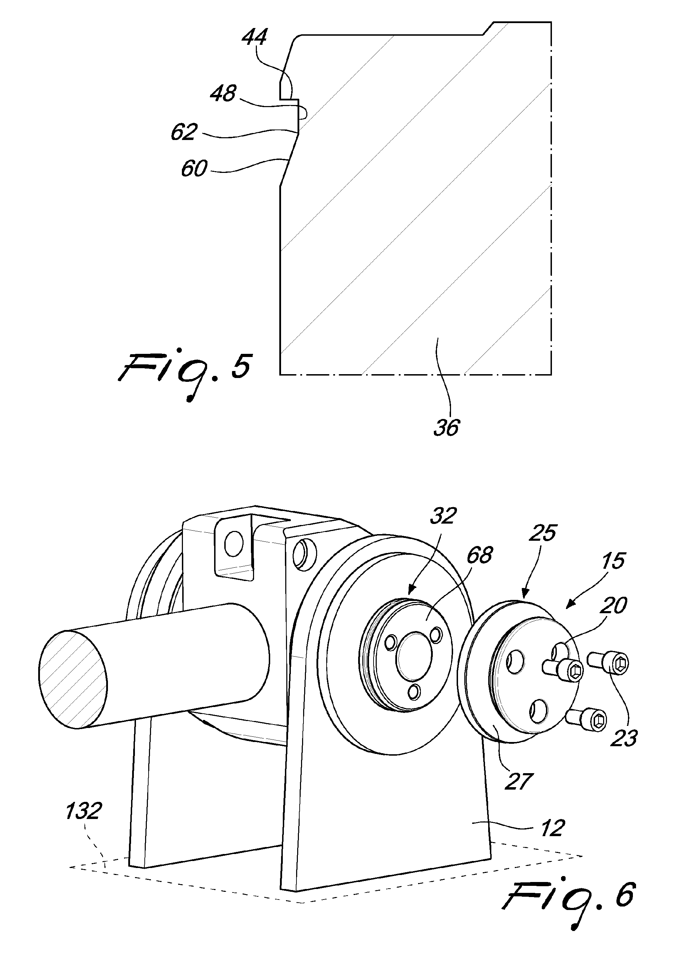

With reference to Fig. 5, the tapered portion **60** may be inclined from the surface of the body **36** towards the platform **48** in groove **40.** Flattened portion **62** may be level with platform **48.** Flattened portion **62** may be replace side wall **42.**

With reference to Fig. 4, the first end **32** may be configured for coupling to a lock mechanism (not shown). The first end **32** may be provided with bolt holes **64** for coupling the lock mechanism by bolts. The bolt holes **64** may be radially distributed on an abutment face **66** at the first end **32.** Bolt holes **64** may extend into the body **36** from the abutment face **66** in a direction parallel to the longitudinal axis **38.**

A raised portion **68** may be positioned in the centre of the abutment face **66.** The bolt holes **64** may be radially distributed around the raised portion **68.** Raised portion **68** may extend from the abutment face **66** in a direction parallel to the longitudinal axis **38.** Raised portion **68** may be positioned such that the longitudinal axis **38** may intersect the centre thereof. Raised portion **68** may be not be covered. Raised portion **68** may be provided for impact from a tool to move the pin **30** in the event of any frictional blockages preventing the movement of the pin **30.**

The first end **32** may have a bevelled edge **69.** The bevelled edge **69** may encircle the first end **32.** Bevelled edge **69** may be adjacent to the groove **40.** Bevelled edge **69** may be located between the groove **40** and the abutment face **66.**

In an alternative embodiment, the first end 32 may be provided with a through hole (not shown) extending laterally through body **36** for receiving a pin (not shown). In a further alternative embodiment, a threaded pin may be provided to engage a lock with nut. In yet another embodiment, the lock mechanism **15** may be provided at the other end of the pin **30** with a projection thereon that can be secured with a bolt to the second lug **14.** With reference to Fig. 6, the lock mechanism **15** may lock the first end **32** of the pin **30** to the first lug **12.** The lock mechanism **15** may comprise a housing **25.** Holes **20** may be formed on the housing **25** to receive bolts **23** for engaging the first end **32.** The housing **25** may be orientated to register the holes **20** with the bolt holes **64** on the first end **32 .** The bolts **23** may be inserted through the holes **20** and the bolt holes **64** to engage the housing **25** to the first end **32.** Housing **25** may have an abutment portion **27** for abutting the first lug **12** or the bushing at the first bore **26.** With the housing engaged to the first end **32** the abutment portion **27** may abut the first lug **12** or the bushing at the first bore **26** thereby locking the first end **32** to the first lug **12.** The lock mechanism **15** may protect the end of pin **30** having the groove **40** and the pin length from groove **40** till the first end **32.**

With reference to Fig. 3, at the second end **34,** the pin **30** may have a limit plate **70.** Limit plate 70 may be in a plane that is normal to the longitudinal axis **38.** Limit plate **70** may be in a plane that is parallel to the abutment face **66.** Limit plate **70** may be positioned such that the longitudinal axis **38** may intersect the centre thereof. Limit plate **70** may have a shoulder **72.** Shoulder **72** may limit the movement of the pin **30** through the first and second lugs **12, 14.** Shoulder **72** may abut the second lug **14.** Shoulder **72** may abut the bushing through the second bore **28.** Limit plate **70** may have at least one planar portion **71.** The planar portion **71** may be orthogonal to the shoulder **72.** Limit plate **70** may have at least two planar portions **71.** The number of the planar portions **71** may correspond to the number of platforms **48.** The limit plate **70** may have at least one planar portion **71** aligned to the position of the platform **48.** The limit plate **70** may comprises a plurality of planar portions **71** each being aligned to the positions of a plurality of platforms **48.**

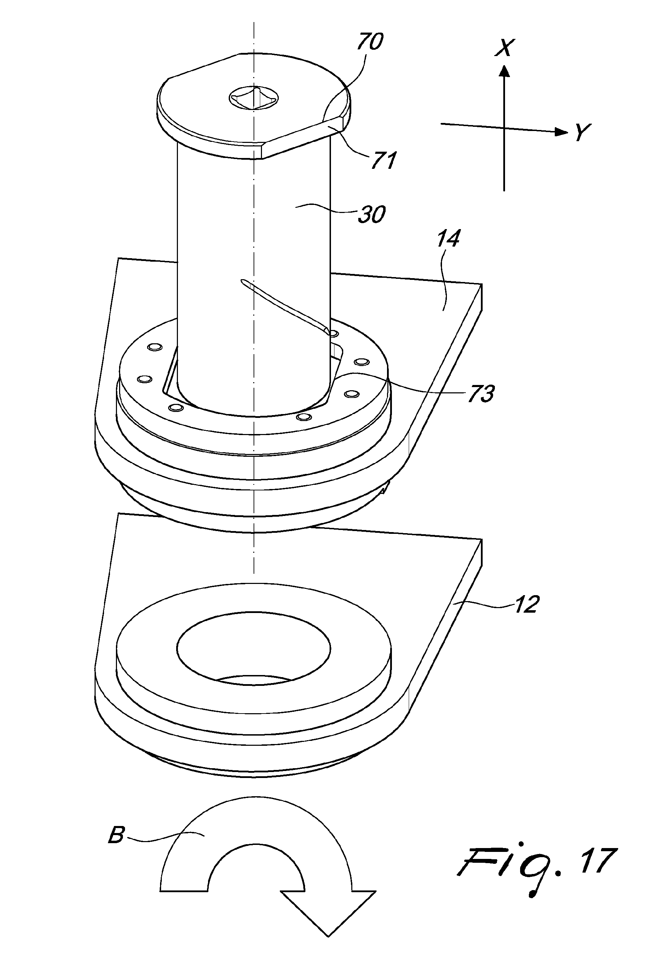

Bushing (not shown) on the second lug **14** may have an aperture so as to receive the limit plate **70.** The aperture **73** may be sized and shaped to receive the limit plate **70.** Fig. 17 illustrates the aperture **73** into which the limit plate **70** may fit.

With reference to Fig. 3, a catch plate **74** may be positioned on the second lug **14.** Catch plate **74** may be positioned between the first lug **12** and the second lug **14.** Catch plate **74** may be positioned on the side of the second lug **14** that faces the first lug **12.** Catch plate **74** may be positioned adjacent the free end **24.** Catch plate **74** may be positioned around second bore **28.** Catch plate **74** may be positioned on the bushing of the second bore **28.**

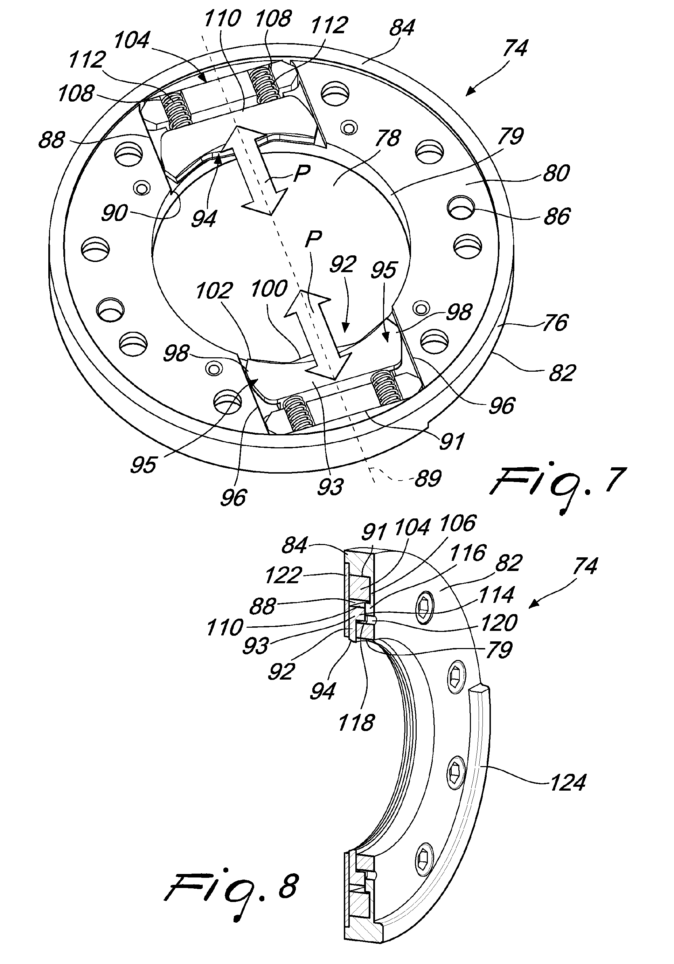

With reference to Fig. 7, the catch plate **74** may have a body **76.** Body **76** may have a central aperture **78.** Central aperture **78** may extend through the body **76.** Central aperture **78** may have the same dimension as the second bore **28** of the second lug **14.** Central aperture **78** may be sized and shaped to receive body **36** of the pin **30.** Central aperture **78** may be defined by an inner edge **79** of the body **76.** Body **76** may have bolt holes **86** for engaging to the second lug **14** or the bushing of the second bore **28.**

Body **76** may have a first side **80** and a second side **82.** First side **80** may face the second lug **14** and second side **82** may face the first lug **12** when the catch plate **74** is positioned on the second lug **14.** In an embodiment, body **76** may be disc shaped.

Catch plate **74** may have a band **84** on body **76.** Band **84** may encircle first side **80.** Band **84** may be perpendicular to the first side **80.** Band **84** may be formed along the circumference of the first side **80.** Band **84** may be concentric with the inner edge **79.** First side **80** may be bordered by the central aperture **78** and the band **84.** Band **84** may contact the surface of the second lug **14** or the bushing of the second bore **28** when the catch plate **74** is positioned on the second lug **14.**

Catch plate **74** may have at least on slot **88.** Slot **88** may be provided in the body **76.** Slot **88** may have side walls **96** and an end wall **91.** Side walls **96** may extend from the inner edge **79** to the end wall **91.** Slot **88** may be a depression in the body **76.** Slot **88** may be provided on the first side **80.** Slot **88** may be adjacent to central aperture **78.** Slot **88** may extend from the inner edge **79** towards the band **84.** Slot **88** may extend linearly from the central aperture **78** to the band **84.** Slot **88** may extend radially from the central aperture **78** towards the band **84.** Slot **88** may have a central axis **89.** Central axis **89** may extend radially through the centre of body **76.**

Slot **88** may have an opening **90** in communication with the central aperture **78.** Opening **90** may be formed in the inner edge **79.** Opening **90** may be located opposite the end wall **91.** Opening **90** may be bordered at opposite ends by side walls **96.** Opening **90** may be positioned adjacent the first side **80.** Opening **90** may be elevated with respect to the floor (not shown) of the slot **88.** Opening **90** may be in a plane that is substantially orthogonal to the central axis **89.**

In an embodiment, the catch plate **74** may have a plurality of slots **88.** Slots **88** may be positioned radially on body **76.** The catch plate **74** may have at least two slots **88** located at opposite points of the first side **80.** The slots **88** may have an angular separation of 180 degrees about the central aperture **78.** In a further embodiment, the catch plate **74** may have at least four slots **88.** The slots **88** may have an angular separation of 90 degrees about the centre aperture **78.**

Catch plate **74** may have a locking element **92.** Locking element **92** may move relative to the body **76.** Locking element **92** may be supported in the slot **88.** Locking element **92** may be stowed in the slot **88.** Locking element **92** may be movable in the slot **88.** Locking element **92** may be movable along a path **P** that is substantially parallel to the central axis **89.**

Locking element **92** may be movable from the stowed position in the slot **88** into the central aperture **78.** Locking element **92** may be in a locked position in the central aperture **78.** Locking element **92** may move into the central aperture through the opening **90.** The locking element **92** may be movable in a linear path from the stowed position into the central aperture **78.**

Locking element **92** may be guided from the stowed position to move into the central aperture **78** by the slot **88.** Side walls **96** of the slot **88** may guide the locking element **92** to move between the stowed positions and the locked positions. In an embodiment, side walls **96** may be parallel and may extend linearly from the inner edge **79** to the end wall **91.** Locking element **92** may move axially in the slot **88** between the stowed positions and the locked positions. Locking element **92** may move radially relative to the body **76** between the stowed positions and the locked positions.

Locking element **92** may have a body **93** that extends laterally across the slot **88.** Locking element **92** may have contact sides **95.** Contact sides **95** may be on opposite parts of the locking element **92.** Contact sides **95** may face the side walls **96** of the slot **88.** Contact sides **95** of the locking element **92** may contact the side walls **96.** Contact sides **95** may be guided by the side walls **96** for linear movement of the locking element **92** between the stowed position and the locked position. Contact sides **95** may be in constant contact with the side walls **96** between the stowed position and the locked position.

Contact edges **98** may extend laterally from the contact sides **95.** Contact edges **98** of the locking element **92** may contact the side walls **96.** Contact edges **98** may be guided by the side walls **96** for linear movement of the locking element **92** between the stowed position and the locked position. Contact edges **98** may be in constant contact with the side walls **96** between the stowed position and the locked position. Contact edges **98** may have small contact areas that contact the side walls. Contact edges **98** may be in the form of truncated protrusion. Contact edges **98** may be formed so as to avoid being obstructed by side walls **96** if the locking element **92** moves in a non linear path between the stowed position and the central aperture **78**.In an alternative embodiment, the locking element **92** may be movable in an arcuate path from the stowed position into the central aperture **78.** The locking element **92** may be pivotably hinged in the slot **88.** The locking element **92** may be pivotable about the hinge so as to rotate from stowed position in the slot **88** to the locked position in the central aperture **78.**

Locking element **92** may have a lock side **94.** Lock side **94** may extend between the contact sides **95.** Lock side **94** may be orientated to face the opening **90.** Lock side **94** may move through the opening **90** into the central aperture **78.** Lock side **94** may engage into the groove **40** of the pin **30.** Lock side **94** may be sized and shaped to engage into the groove **40.** Lock side **94** may be configured to move in the groove **40.** Lock side **94** may contact the body **36** of the pin **30.** Lock side **94** may be configured to slide along the surface of body **36.**

Lock side **94** may be curved with a centrally located protrusion **100.** Ends **102** on opposite sides of the protrusion **100** may extend further from the body **93** of the locking element **92** than the protrusion **100.** Protrusion **100** may be configured to contact platform **48,** and the floor **46.**

Locking element **92** may have a biasing side **110.** Biasing side **110** may be subject to a biasing force. Biasing side **110** may be substantially orthogonal to the central axis **89.** Biasing side **110** may extend between the contact sides **95.** Biasing side **110** may be orientated to face away from the opening **90.** Biasing side **110** may be formed opposite the lock side **94.**

In an embodiment, the catch plate **74** may have a plurality of locking elements **92** each positioned in a respective slot **88.** The catch plate **74** may have at least two locking elements **92.** In a further embodiment, the catch plate **74** may have at least four locking elements **92.**

Catch plate **74** may comprise a support element **104.** The support element **104** may be located in the slot **88.** Support element **104** may extend transversely across the slot **88.** The support element **104** may be positioned adjacent the end wall **91** of the slot **88.** Support element **104** may be positioned between the end wall **91** and the biasing side **110** of the locking element **92.** Support element **104** may be retained in the slot **88** at the end wall **91.** Support element **104** may have a longitudinal axis that is substantially orthogonal to the central axis **89.**

Support element **104** may have at least one duct **108.** Duct **108** may extend transversely across the support element **104.** Duct **108** may be substantially parallel to the central axis **89.** Duct **108** may extend to the end wall **91.** Duct **108** may be substantially parallel to the side walls **96** of the slot **88.** Duct **108** may be substantially orthogonal to the biasing side **110.** Rod **109** may be sized and shaped to fit into the duct **108.**

Duct **108** may be shaped and sized to retain a biasing element **112.** The biasing element **112** may extend from the duct **108** in a direction away from the band **84** into the slot **88.** The biasing element **112** may extend in a direction parallel to central axis **89.** Biasing element **112** may be interposed between the end wall **91** and the biasing side **110.** Biasing element **112** may contact the end wall **91** at an end and the biasing side **110** at an opposite end. Biasing element **112** may be under tension when positioned in the duct **108** between the locking element **92** and the housing **76.**

Locking element **92** may be coupled to the biasing element **112.** In an embodiment, the biasing element **112** may be a spring. The spring may be a helical spring. Rod **109** may be sized and shaped to fit into the centre of the helical spring. The biasing element **112** may exert a biasing force in a direction substantially parallel to the central axis **89.** Biasing element **112** may exert a biasing force on the biasing side **110** of the locking element **92.** Biasing element **112** may urge the locking element **92** to move from the stowed position to the locked position. Biasing element **112** may urge the locking element **92** to move into the central aperture **78.** Biasing element **112** may urge the locking element **92** against the pin **30.**

In an embodiment, support element **104** may have two ducts **108** positioned adjacent the opposite ends thereof. Each duct **108** may be provided with a biasing element **112.**

With reference to Fig. 8, the locking element **92** may have a flange **114** extending transversely from body **93.** Flange **114** may be substantially orthogonal to body **93.** Flange **93** may be positioned at the biasing side **110.** A side flange **114** may be contiguous with biasing side **110.** Biasing side **110** may be continuous with a side of flange **114.** Flange **114** may extend towards the slot floor **116.**

Flange **114** may move between the support element **104** and an abutting surface **118.** Abutting surface **118** may be formed on the wall of the inner edge **79.** Abutting surface **118** may be opposite the inner edge **79.** The extent of movement of the locking element **92** between the stowed position in the slot **88** and the locked position in the central aperture **78** may be determined by the movement of the flange **114** between the support element **104** and the abutting surface **118.** Support element **104** may determine limit of the locking element **92** in the stowed position and the abutting surface **118** may determine the limit of the locking element **92** in the locked position.

A cut out **106** may be formed in the slot floor **116.** The cut out **106** may be located towards the band **84** and away from the opening **90.** Cut out **106** may be positioned transversely across the slot **88.** Support element **104** may be seated in the cut out **106** at the end wall **91.**

Catch plate **74** may have an access **120** that extends from the second side **82** through the body **76** to the slot floor **116.** The access **120** has an aperture adjacent the abutting surface **118.** Insertion of a blocking element (not shown) such as a pin may serve to prevent the flange **114** from moving into contact with the abutting surface **118.** The locking element **92** may be prevented from moving to the locked position through insertion the insertion of the blocking element.

A cover plate **122** may be positioned over the first side **80** of the body **76.** Cover plate **122** may have a thickness that is the same as the height as the band **84.** Cover plate **122** may be interposed between the first side **80** and the second lug **14.** Cover 122 may be in contact with the second lug 14. Cover plate **122** may be interposed between the first side **80** and the bushing of the second bore **28.** Cover plate **122** may be centred on the first side **80** by the band **84.** Cover **122** may retain the biasing element **122.**

Catch plate **74** may have an alignment edge **124** projecting transversely from the body **76.** Alignment edge **124** may extend from the second side **82.** Alignment edge **124** may extend along the circumference of the second side **82.** Alignment edge **124** may extend through an angle of 90 degrees about the central aperture **78.**

The alignment edge **124** may enable alignment of a cylinder (not shown) with the link assembly **10.** The alignment edge **124** may receive the piston rod head **19.** The alignment edge **124** may enable alignment of the coupling hole in the piston rod head **19** and the first and second bores **26, 28** of the link assembly **10.**

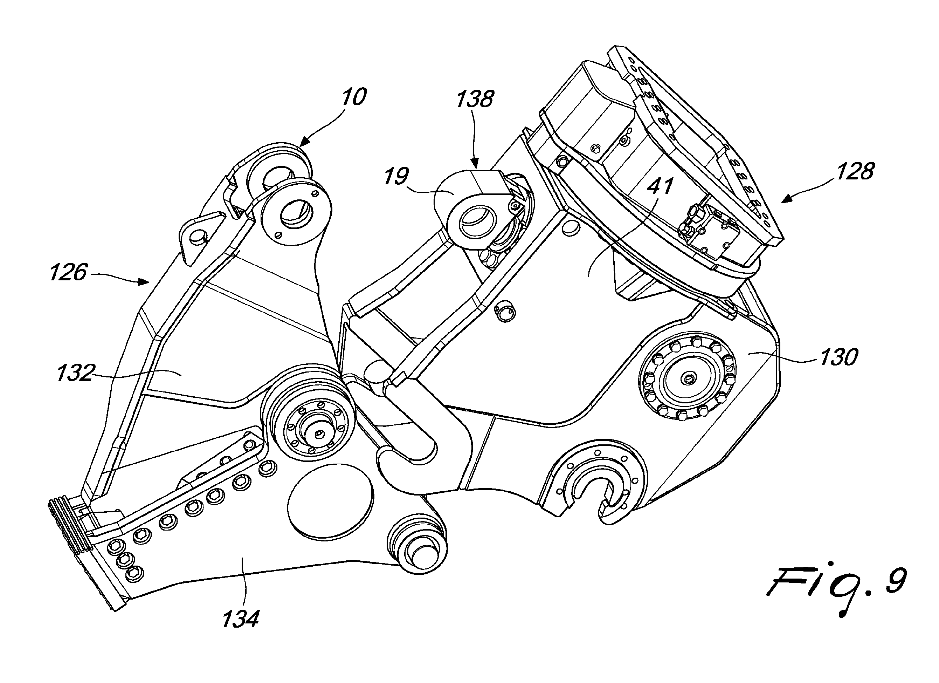

With reference to Fig. 9, the link assembly **10** may be provided on a jaw set **126** of a demolition tool **128.** The demolition tool **128** may comprise a frame **130** and the jaw set **126.** The jaw set **126** may comprise a first jaw **132** and a second jaw **134** coupled to the frame **130.** The link assembly **10** may be formed on the first or second jaw **132, 134.** The cylinder **138** may be positioned in the frame **130.** The piston rod head **19** of the cylinder **138** may extend from the frame **130** for coupling to the link assembly **10.**

In the link assembly **10** the locking element **92** may be supported on the second lug **14** for engaging into the groove **40** to retain the pin **30** at the second lug **14.** The locking element **92** may be urged from the stowed position to the locked position to engage in groove **40.** The pin **30** may be rotatable relative to the second lug **14** such that the locking element **92** is movable along the groove **40** between a first groove position and a second groove position.

The platform **48** may be at the first groove position. The first groove position may be limited by a single side wall **44.** The second groove position may be any point on the floor having both the side walls **42, 44.** The second groove position may limited by two side walls **42, 44.** In an embodiment, the groove **40** may have a platform **48** at the first groove position where there is an absence of side wall **42** which may prevent axial movement in one direction and may permit axial movement in the opposite direction. Axial movement may be prevented at the second groove position where both the side walls **42, 44** are present.

A method of decoupling a cylinder **138** with a jaw **132** in a demolition tool **128,** the jaw **132** having spaced apart first and second lugs. The method comprising the steps of unlocking a first end **32** of a pin **30** from a first lug **12** wherein the pin **30** has a groove **30** adjacent the first end **32,** the groove **40** being in a plane substantially transverse to the longitudinal axis 38 of the pin **30;** rotating the first and second lugs **12, 14** in a first direction A from a first lug position to a second lug position wherein the pin **30** slides through the first and second lugs **12, 14** and the first end **32** moves from the first lug **12** to the second lug **14** to uncouple the cylinder **138** from the jaw **126;** engaging a lock element **92** biasingly supported on the second lug **12** into the groove **40** to retain the pin **30** at the second lug **12;** and moving the cylinder **138** from between the spaced apart first and second lugs **12, 14.**

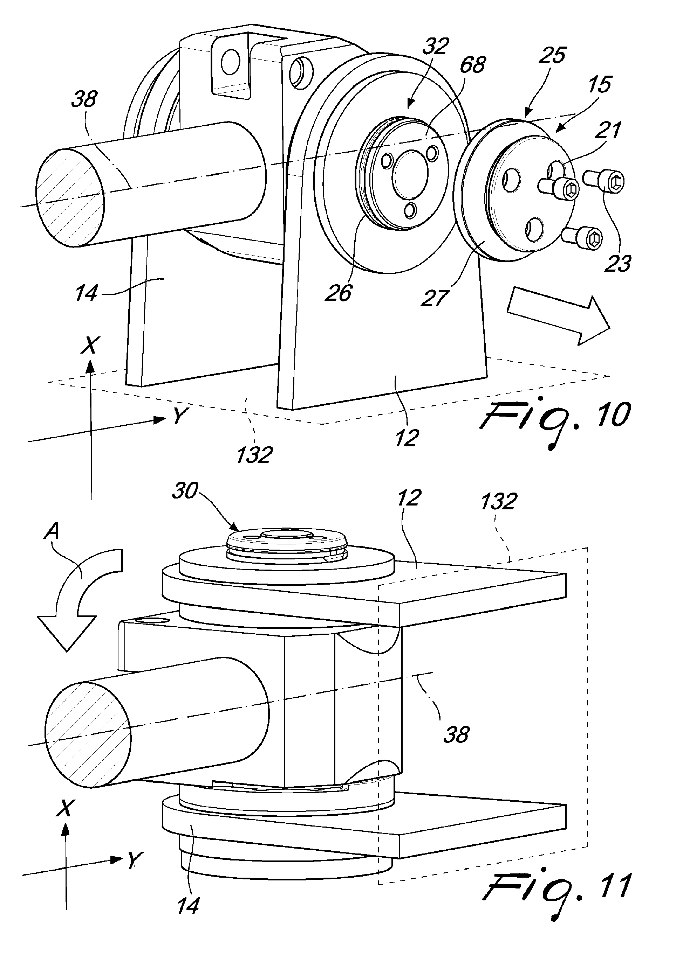

The method of decoupling a cylinder **138** with the jaw **132** in a demolition tool **128** will now be described in reference to Figs. 10 to 22. In an embodiment, the method may involve changing a first cylinder **138** with a second cylinder **238.**

With reference to Fig. 10, the first and second lugs **12, 14** may be aligned along an **X** axis. First and second lugs **12, 14** may be parallel to the **X** axis and perpendicular to the **Y** axis. The first and second lugs **12, 14** may be in a first lug position. The longitudinal axis **38** of the pin **30** may be perpendicular to the **X** axis in the first lug position.

The relative mutual alignment of the first and second lugs **12, 14** may remain unchanged as the lugs **12, 14** remain in the respective fixed locations on the jaw **132.** In an embodiment, the **X** axis may be a vertical alignment and the Y axis may be a horizontal alignment.

The method may comprise the pin **30** may be unlocked from the first lug **12.** The first end **32** of the pin **30** may be unlocked from the first lug **12.** Unlocking of the pin **30** may permit the pin **30** to be slidable through the first and second bores **26, 28** of the first and second lugs **12, 14.** The pin **30** may have the groove **40** adjacent the first end **32.** The groove **40** may be in a plane substantially transverse to the longitudinal axis **38** of the pin **30.** The pin **30** may be slidable along the longitudinal axis **38.**

In an embodiment, the lock mechanism **15** may be removed from engagement with the first end **32** and the first lug **12.** Bolts **23** coupled to both the pin **30** and the lock mechanism **15** may be removed so as to permit the removal of the lock mechanism **15.**

With reference to Fig. 11, the method may comprise rotating the first and second lugs **12, 14** along a first direction **A.** The first and second lugs **12, 14** may be rotated from alignment with the **X** axis towards the **Y** axis. The first and second lugs **12, 14** may move from the first lug position to a second lug position. At the second position the first lug **12** may be vertically elevated relative to the second lug **14.**

In an embodiment, the first and second lugs **12, 14** may be rotated from the first lug position to the second lug position about an angle of 90 degrees. The first and second lugs **12, 14** may be rotated from alignment with the **X** axis to alignment with the **Y** axis. First and second lugs **12, 14** may be parallel to the **Y** axis and perpendicular to the **X** axis. The longitudinal axis **38** of the pin **30** may be perpendicular to the **Y** axis.

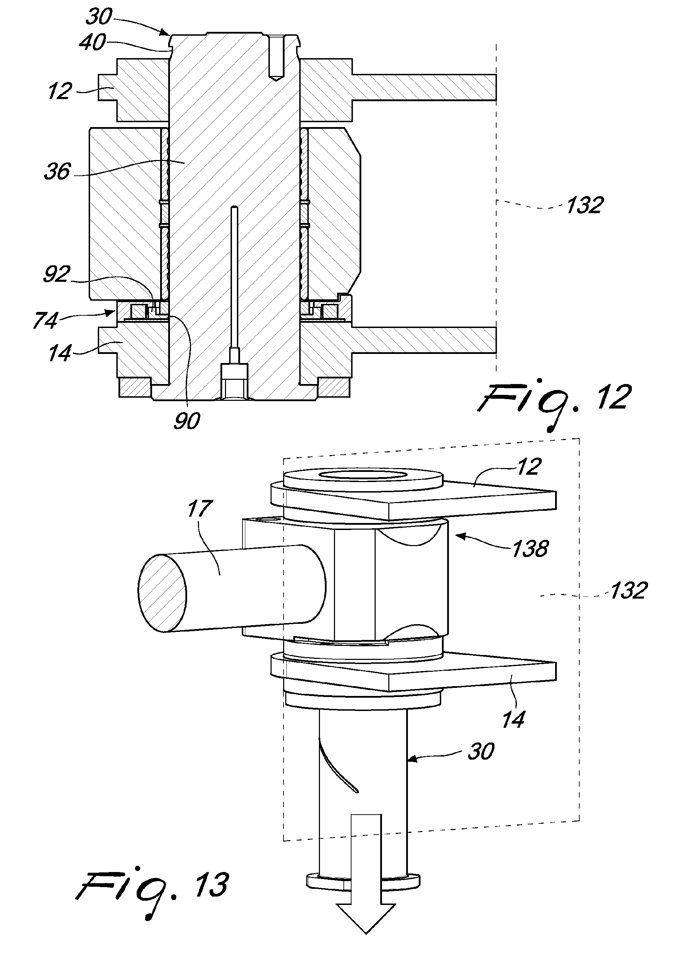

With reference to Fig. 12, the locking element **92** in the catch plate **74** may be in the stowed position. The access **120** may be free of a blocking element so as to permit the locking element **92** to move to the locked position. The locking element **92** may be urged against the pin **30.** The lock side **94** may be in contact with the body **36** of the pin **30.** Lock side **94** may remain in the stowed position while the opening **90** is blocked by the body **36.**

With reference to Fig. 13, at the second lug position, the pin **30** may slide relative to the first and second lugs **12, 14.** The pin **30** may slide through the first and second lugs **12, 14.** The pin **30** may slide relative to the first and second lugs **12, 14** as the pin **30** is no longer locked at the first lug **12.** The first end **32** may move from the first lug **12** to the second lug **14** to uncouple the cylinder **138** from the first and second lugs **12, 14** so as to uncouple the cylinder **138** from jaw **132.**

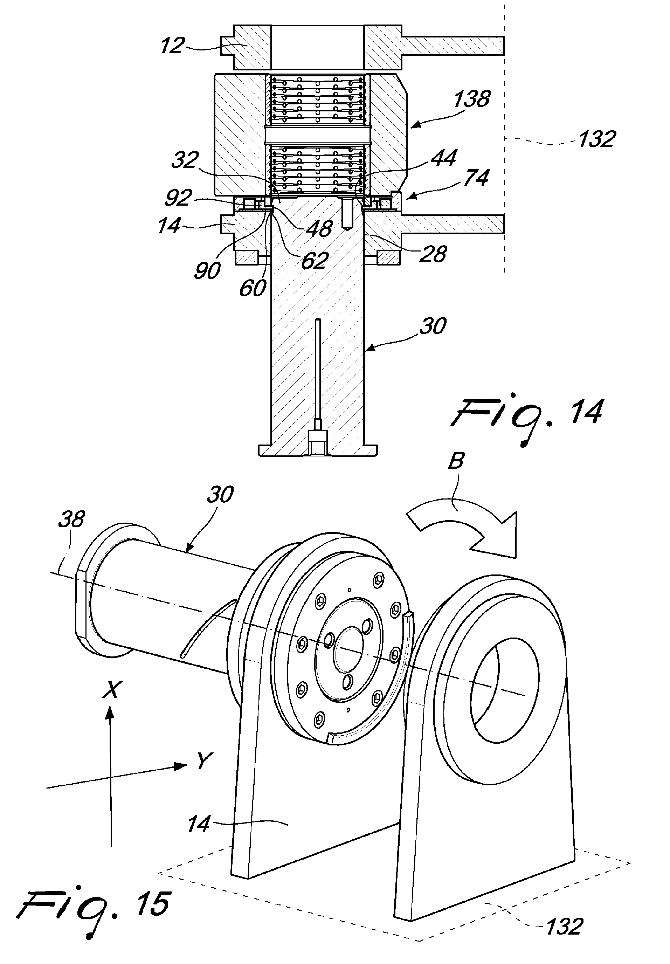

With reference to Fig. 14, the first end **32** of the pin **30** may be at the second lug **14.** The pin **30** may be uncoupled from the cylinder **138.** The cylinder **138** may be uncoupled from the first and second lugs **12, 14** and the jaw **132.** The relative movement of the body **36** through the second bore **28** may move the groove **40** into alignment with the opening **90.** The opening **90** may be unblocked with the groove **40** being positioned at the opening **90.**

The locking element **92** may be biasingly supported on the second lug **14.** The locking element **92** may be urged by the biasing element (not shown) to the locked position. The lock side **94** may engage into the groove **40.** The pin **30** may be retained at the second lug **14** with the engagement of the locking element **92** into the groove **40.** Lock side **94** may engage the platform **48** in the groove **40.** The lock side **94** may abut the side wall **44** of the groove **40.**

In an embodiment, lock side **94** may first engage the tapered portion **60** prior to engaging into the groove **40.** In a further embodiment, lock portion **94** may engage into the flattened portion **62** prior to engaging into the groove **40.**

The method may comprise moving the cylinder **138** from between the spaced apart first and second lugs **12, 14.** The piston rod head **19** may be moved from between the first and second lugs **12, 14.**

With reference to Fig. 15, the method may further comprise a step of rotating the first and second lugs **12, 14** from the second lug position towards the first lug position in a second direction **B** that is opposite to the first direction **A.** The first and second lugs **12, 14** may be rotated from alignment with the **Y** axis towards the **X** axis.

In an embodiment, the first and second lugs **12, 14** may be rotated from the second lug position to the first lug position. First and second lugs **12, 14** may be rotated about an angle of 90 degrees. The first and second lugs **12, 14** may be rotated from alignment with the **Y** axis to alignment with the **X** axis. First and second lugs **12, 14** may be parallel to the **X** axis and perpendicular to the **Y** axis. The longitudinal axis **38** of the pin **30** may be perpendicular to the **X** axis.

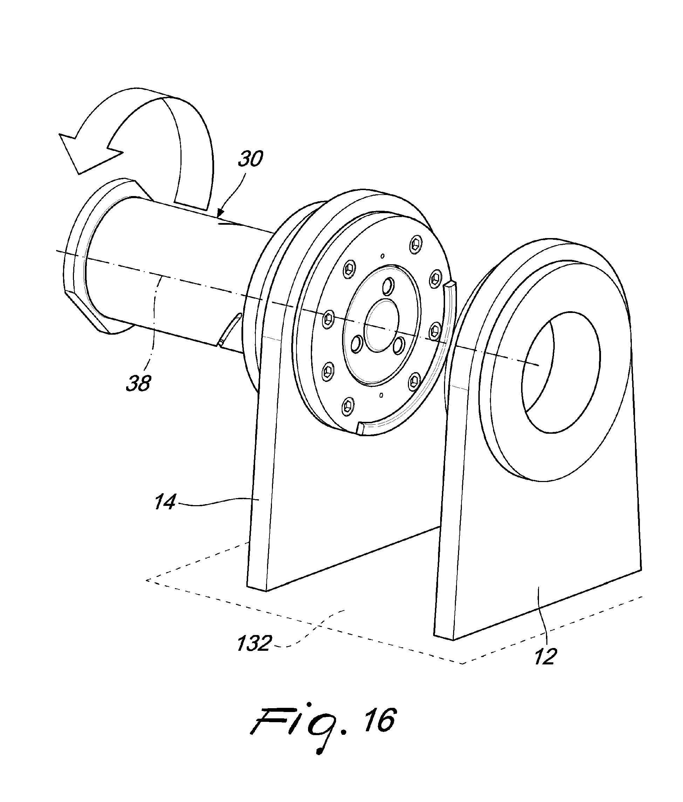

With reference to Fig. 16, the method may further comprise a step of rotating the pin **30.** The pin **30** may be rotated so as to move the locking element **92** along the groove **40.** Locking element **92** may move along the floor **46** of the groove **40.** The locking element **92** may move from a first groove position to a second groove position. Axial movement of the pin **30** may be prevented at the second groove position.. Pin **30** may be rotated in the clockwise or the anticlockwise direction. The locking element **92** may move along the floor **46** when moving from the platform **48** to the second groove position.

Pin **30** may be rotated between 20 degrees to 90 degrees about the longitudinal axis **38.** In an embodiment, pin **30** may be rotated 90 degrees about the longitudinal axis **38.** In a further embodiment, pin **30** may be rotated 45 degrees about the longitudinal axis **38.**

With reference to Fig. 17, the method may further comprise the step of rotating the first and second lugs **12, 14** from the first lug position to a third lug position. The first and second lugs **12, 14** may be rotated along the second direction **B.** The first and second lugs **12, 14** may be rotated from alignment with the **X** axis towards the **Y** axis. At the third lug position the second lug **14** may be vertically elevated relative to the first lug **12.**

In an embodiment, the first and second lugs **12, 14** may be rotated from the first lug position to the third lug position about an angle of 90 degrees. The first and second lugs **12, 14** may be rotated from alignment with the **X** axis to alignment with the **Y** axis. First and second lugs **12, 14** may be parallel to the **Y** axis and perpendicular to the **X** axis. The longitudinal axis **38** of the pin **30** may be perpendicular to the **Y** axis.

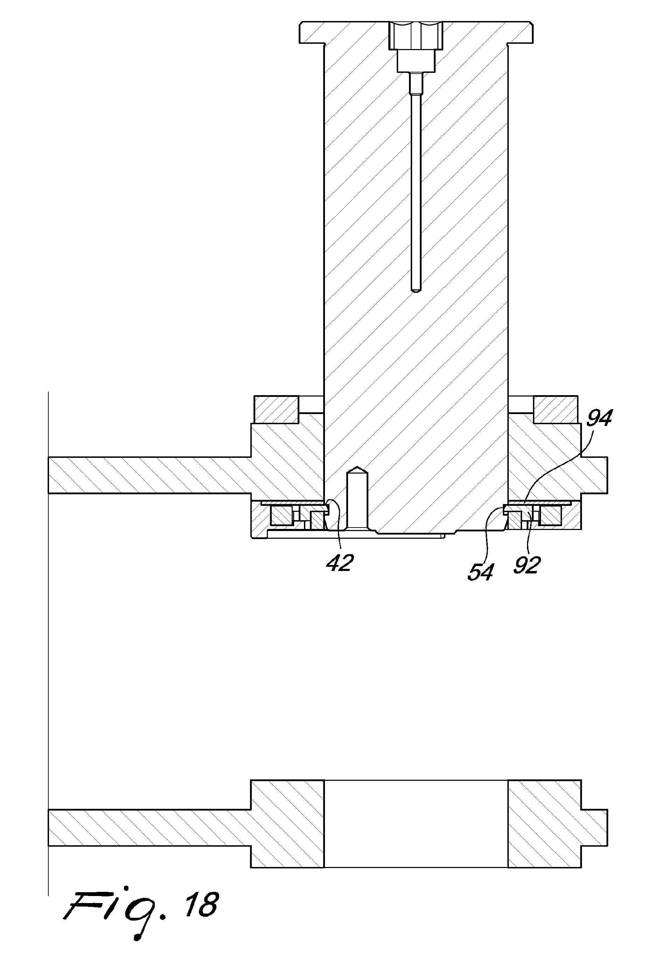

With reference to Fig. 18, the locking element **92** in the catch plate **74** may be in the locked position. The locking element **92** may be urged against the pin **30.** The lock side **94** may be in contact with the groove **40.** The lock side **94** may be positioned between the side walls **42, 44.** Locking element **92** may retained in the groove **40** and the pin **30** may not be axially movable relative to the second lug **14.** Lock side **94** may abut against the side wall **42.**

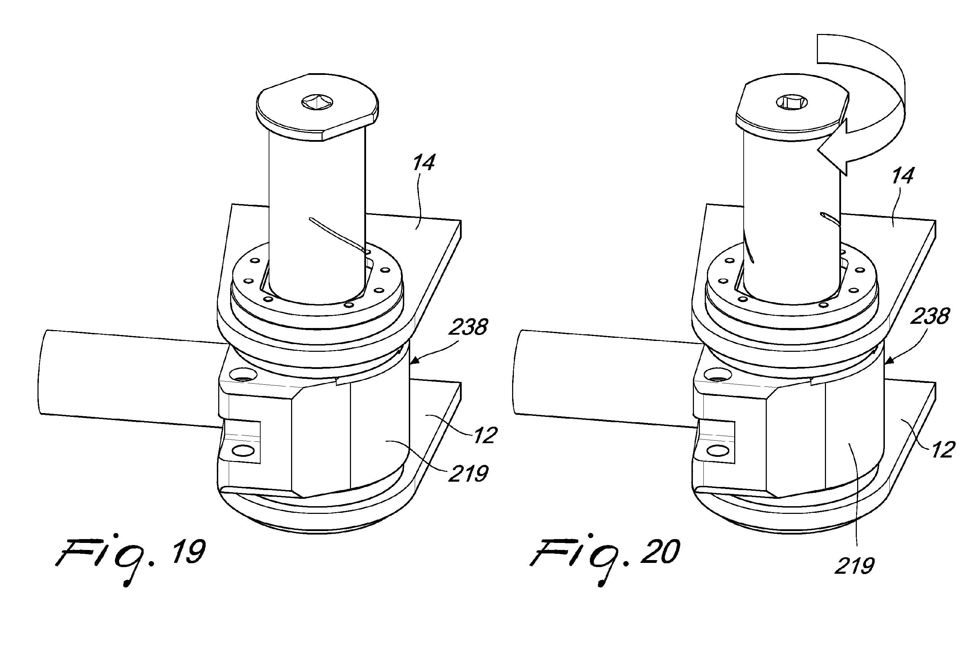

With reference to Fig. 19, the method may further comprise a step of positioning a second cylinder **238** between the spaced apart first and second lugs **12, 14.** The piston head **219** may be positioned between the spaced apart first and second lugs **12, 14.** The eye (not shown) of the piston rod head **219** may be aligned with the first and second bores **26, 28.**

With reference to Fig. 20, the method may further comprise the step of rotating the pin **30.** The pin **30** may be rotated so as to move the locking element **92** along the groove **40** from the second groove position to the first groove position so as to permit the pin **30** to slide from the second lug **14** to the first lug 12. Pin **30** may slide through the first and second lugs **12, 14.** The first end **32** may move from the second lug **14** to the first lug **12** to couple the second cylinder **238** to the first and second lugs **12, 14** so as to couple the second cylinder **238** to the jaw **132.**

Pin **30** may be rotated in the opposite direction. Pin **30** may be rotated between 20 degrees to 90 degrees about the longitudinal axis **38.** In an embodiment, pin **30** may be rotated 90 degrees about the longitudinal axis **38.** In a further embodiment, pin **30** may be rotated 45 degrees about the longitudinal axis **38.** Pin **30** may be rotated such that the lock side **94** may be positioned at the platform **48.** Lock side **94** may be adjacent to the tapered portion **60.** In an embodiment, lock side **94** may be adjacent to the flattened portion **62.** The absence of side wall **42** may enable the lock side **94** to move out of the groove **40** and into contact with the surface of the body **36.**

The position of the pin **30** may be determined by the interaction of the aperture **73** in the second lug **14** and the limit plate **70.** The specific orientation to position lock side **94** at the platform **48** may be determined by the limit plate **70** fitting into the aperture **73.**

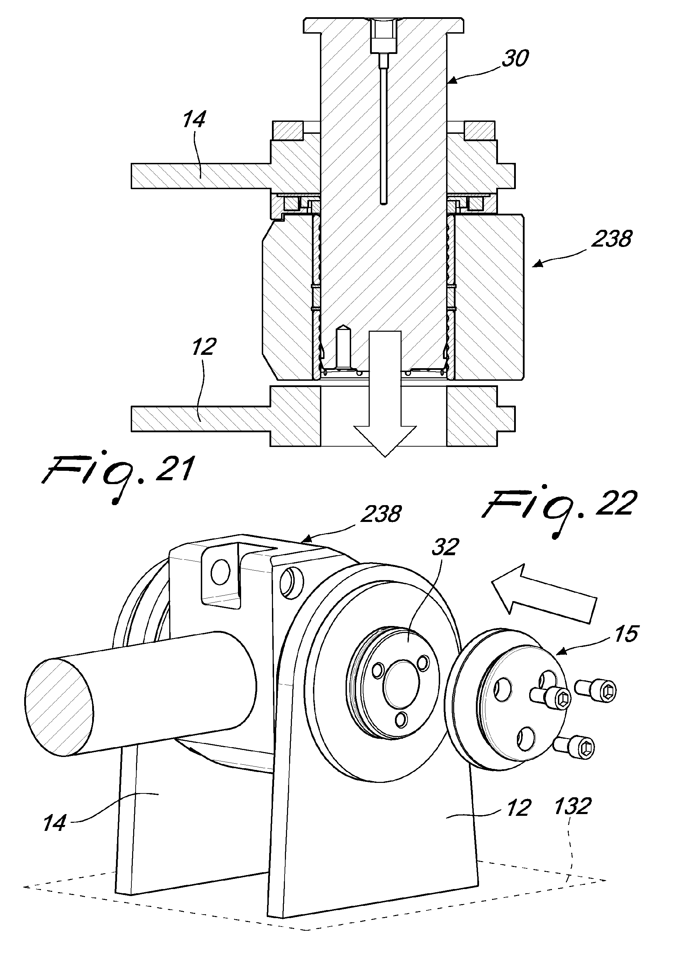

With reference to Fig. 21, the locking element **92** may be moved from the locked position to the stowed position. The body **36** may block the opening **90** and hold the locking element **92** in the stowed position as the pin **30** may slides from the second lug **14** to the first lug **12.** The shoulder **72** of the limit plate **70** abutting the second lug **14** may restrict the pin **30** to slide further through the lugs **12, 14.**

With reference to Fig. 22, the method may comprise a step of engaging the first end **32** of the pin **30** to the first lug **12.** The lock mechanism **15** may be engaged to the first end **32** and to the first lug **12.** The pin **30** may be locked to the first lug **12** by the lock mechanism so as to retain the second cylinder to the first and second lugs **12, 14** and the jaw **132.**

The skilled person would appreciate that foregoing embodiments may be modified or combined to obtain the link assembly **10,** pin **30,** catch plate **74** or the method of the present disclosure.

### Industrial Applicability

This disclosure describes a method, a link assembly **10,** a pin **30** and a catch plate **74** for decoupling a cylinder **138** in a demolition tool **128.** The cylinder **138** may be connected to either an upper jaw **132** or a lower jaw **134** of a jaw set **126** of the demolition tool. The method and link assembly **10** may enable the connected cylinder **138** to be changed without lifting and positioning the pin **30.** The pin **30** may be moved to a uncoupling position where the cylinder **138** may be uncoupled from the coupling assembly **10.** The pin **30** may be moved to the coupling position once a second cylinder **238** is positioned in the link assembly **10.** The pin **30** may be retained on the link assembly **10** by the catch plate **74.**

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A pin (30) of a link assembly (10) for decoupling a cylinder (138) from a jaw (132) in a demolition tool (128), the pin (30) comprising:
a longitudinally extended body (36), the body (36) having a first end (32) and a second end (34); and
a groove (40) adjacent the first end (32), the groove (40) being in a plane substantially transverse to a longitudinal axis (38).

2. The pin (30) of claim 1 wherein the magnitude of depth of the groove (40) from the surface of body (36) varies about the longitudinal axis (38).

3. The pin (30) of claim 2 further comprising at least one platform (48) provided in the groove (40), the at least one platform (48) having a highest magnitude of depth relative to the rest of the groove (40).

4. The pin (30) of claims 1, 2 or 3 wherein the groove (40) comprises a plurality of platforms (48).

5. The pin (30) of claim 4 wherein the groove (40) comprises two platforms (48) having an angular separation of 180 degrees

6. The pin (30) of claim 4 wherein the groove (40) comprises four platforms (48) having an angular separation of 90 degrees.

7. The pin (30) of claim 5 or 6 wherein sections of floor (46) are interposed between the platforms (48).

8. The pin (30) of any one of preceding claims further comprising a tapered portion (60) adjacent to the groove (40).

9. The pin (30) of claim 8 wherein a flattened portion (62) is interposed between the tapered portion (60) and the groove (40).

10. The pin (30) of any one of preceding claims wherein the first end (32) is configured for coupling to a lock mechanism (15).

11. The pin (30) of claim 10 wherein the first end (32) has an abutment face (66) provided with radially distributed bolt holes (64).

12. The pin (30) of any one of preceding claims further comprising a limit plate (70) at the second end (32).

13. The pin (30) of claim 12 wherein the limit plate (70) has at least one planar portion (71) aligned to the position of the platform (48).

14. The pin (30) of claim 13 wherein the limit plate (70) comprises a plurality of planar portions (71) each being aligned to the positions of a plurality of platforms (48).
